# EUROPÄISCHE PATENTANMELDUNG

(11) **EP 2 090 898 A1**
(43) Veröffentlichungstag der Anmeldung: **19.08.2009**
(21) Anmeldenummer: 09000464.9
(22) Anmeldetag: 15.01.2009
(51) Int. Cl.: G01S 7/52, G01S 15/93

(54) **Verfahren und Anordnung zur Verfügbarkeitsprüfung von Ultraschallsensoren**

(30) Priorität: 13.02.2008 DE 102008008956
(71) Anmelder: Valeo Schalter und Sensoren GmbH, 74321 Bietigheim-Bissingen (DE)
(72) Erfinder: Hallek, Michael, 71717 Beilstein (DE); Heimberger, Markus, 71732 Tamm (DE)

(57) **Zusammenfassung**

Es wird ein Verfahren und eine Anordnung zur Verfügbarkeitsprüfung von Ultraschallsensoren (1,5) vorgeschlagen, die die von einem zu erfassenden Objekt (4) reflektierten Ultraschallsignale auswerten. In einem Auswertezyklus unter zumindest ähnlichen Umgebungsbedingungen an der Messstrecke zwischen dem jeweiligen Ultraschallsensor (1,5) und dem Objekt (4) wird die Empfangsempfindlichkeit des Empfängers zwischen einem unteren relativ empfindlichen und einem oberen relativ unempfindlichen Wert verändert und aus dem Vergleich der beiden empfangenen Signale im Falle von relativ gleichen Signalstärken wird eine Behinderung der Verfügbarkeit des jeweiligen Ultraschallsensors (1,5) signalisiert. Bei einer Verwendung von einer Mehrzahl von Ultraschallsensoren (1,5) werden einer oder mehrere Ultraschallsensoren (1,5) im Auswertezyklus angesteuert und auch die reflektierten Ultraschallsignale von den jeweils anderen Ultraschallsensoren (1,5) werden ausgewertet.

## Beschreibung

### Stand der Technik

Die Erfindung betrifft ein Verfahren und eine Anordnung zur Verfügbarkeitsprüfung von Ultraschallsensoren, vorzugsweise bei Umfelderkennungssystemen für Fahrzeuge, nach der Gattung des Haupt- und der Nebenansprüche.

Bei bisher üblichen ultraschallbasierenden Umfelderkennungssystemen, zum Beispiel für Einparkhilfen für Fahrzeuge, werden mindestens ein Ultraschallsensor oder mehrere beispielsweise in der vorderen und/oder hinteren Stoßstange eines Kraftfahrzeuges verbaut. Jeder Ultraschallsensor sendet dabei ein Ultraschallsignal aus, welches von einem möglichen Objekt bzw. Hindernis reflektiert wird und von dem gleichen Ultraschallsensor und oder von weiteren Ultraschallsensoren empfangen werden kann.

Solche Umfelderkennungssysteme liefern somit Informationen über das Umfeld eines Fahrzeugs, d.h. konkret den Abstand eines möglichen Hindernisses, wobei allerdings Informationen über die Verfügbarkeit des Systems nur teilweise erfasst und übermittelt werden können. Speziell gibt es keine Aussage darüber, ob ein Ultraschallsensor einen Abstand überhaupt erfassen kann, da aufgrund von Umwelteinflüssen, wie beispielsweise Eisbildung oder Verschmutzung am Ultraschallsensor, dieser ein Hindernis überhaupt nicht detektieren kann. Es wird in der Regel daher immer davon ausgegangen, dass der Ultraschallsensor einwandfrei arbeitet, d.h. korrekt angeschlossen ist und keinen technischen Mangel oder sonstige Beeinträchtigungen aufweist.

Aus der DE 102 47 971 A1 ist ein solches Umfelderkennungssystem mit einem Ultraschallsensor bekannt, bei dem mindestens ein Sensorwert im Hinblick auf die Störungsfreiheit des Ultraschallsensors dadurch ausgewertet wird, dass mindestens ein erfasster Sensorwert mit einem gespeicherten Sensorwert der Normalfunktion des Ultraschallsensors verglichen wird. Als Vergleichswerte werden hier insbesondere die Eigenfrequenz und die Ausschwingzeit des Ultraschallsensors herangezogen und bei einer bestimmten Abweichung kann auf eine Störung des Ultraschallsensor geschlossen werden.

Aus der DD 289 346 A5 ist ein Verfahren zur Unterdrückung von Störsignalen bei der Auswertung von solchen in einem Objekterkennungssystem empfangenen Ultraschallsignalen bekannt, bei dem die Impulslängen der empfangenen Signale digital ausgewertet werden. Es wird hier ein Vergleich der Impulslängen des Sendesignals und des Empfangssignals durchgeführt und aus den Abweichungen werden Störsignale ermittelt und anschließend unterdrückt. Die Störsignale werden dabei von externen Störquellen erzeugt und weisen eine vom Sendesignal abweichende Länge und Amplitudencharakteristik auf.

Die hier angewendeten Umfelderkennungssysteme bestehen in der Regel aus mehreren Ultraschallsensoren, die in der Regel an der Stoßstange des Fahrzeugs in einer vorgegebenen Weise neben- oder übereinander angeordnet werden. In diesem Fall sendet mindestens ein Ultraschallsensor Signale aus, die von einem möglichen Hindernis reflektiert werden können. Dieser Ultraschallsensor und/oder einer oder mehrere andere Ultraschallsensoren können diese Signale empfangen und entsprechend eine Hindernisinformation berechnen.

Bei den zuvor beschriebenen Umfelderkennungssystemen für Parkhilfssysteme ist es häufig der Fall, dass immer nur ein Ultraschallsensor sendet und/oder die anderen Ultraschallsensoren auf die reflektierten Signale warten. Damit werden mögliche Interferenzen vermieden, die entstehen würden, wenn mehrere Ultraschallsensoren gleichzeitig senden. Dies hat aber zur Folge, dass der Aufwand für die Signalverarbeitung erheblich steigt.

### Darstellung der Erfindung

Um die zuvor beschriebenen Nachteile des Standes der Technik zu vermeiden, kann es als Aufgabe der Erfindung angesehen werden, eine Verfügbarkeit von Ultraschallsensoren auch bei Störungen verursachenden Umweltbedingungen auf einfache Weise zu erfassen. Die Erfindung geht dabei von einem Verfahren zur Verfügbarkeitsprüfung von Ultraschallsensoren aus, die einen Sender und einen Empfänger aufweisen und die die von einem zu erfassenden Objekt reflektierten Ultraschallsignale auswerten.

Erfindungsgemäß wird in vorteilhafter Weise in einem Auswertezyklus unter zumindest ähnlichen Umgebungsbedingungen an der Messstrecke zwischen dem jeweiligen Ultraschallsensor und dem Objekt die Empfangsempfindlichkeit des Empfängers zwischen einem relativ empfindlichen und einem relativ unempfindlichen Wert verändert und aus dem Vergleich der beiden empfangenen Signale wird im Falle von relativ gleichen Signalstärken eine Behinderung der Verfügbarkeit des jeweiligen Ultraschallsensors signalisiert.

Bei einer besonders vorteilhaften Ausführung des erfindungsgemäßen Verfahrens werden bei einer Verwendung von einer Mehrzahl von Ultraschallsensoren mehrere Ultraschallsensoren im Auswertezyklus angesteuert und dabei werden auch die reflektierten Ultraschallsignale von den jeweils anderen Ultraschallsensoren ausgewertet.

Es ist hierbei möglich, dass die Ultraschallsensoren im Auswertezyklus in einer vorgegebenen Reihenfolge hintereinander angesteuert oder auch, dass alle Ultraschallsensoren im Auswertezyklus gleichzeitig angesteuert werden. Der Auswertezyklus kann dabei quasi automatisch in vorgegeben zeitlichen Abständen in den Normalbetrieb der Ultraschallsensoren eingefügt sein oder in Abhängigkeit von physikalischen Bedingungen der Messstrecke oder der Messanordnung bzw. auch manuell generiert werden.

Bei einer vorteilhaften Anordnung zur Ausführung des zuvor beschriebenen Verfahrens ist mindestens ein Ultraschallsensor vorhanden, der in einem vorgegebenen Abstand zu einem zu erfassenden Objekt angeordnet ist, wobei sowohl der jeweilige Sender und der jeweilige Empfänger des Ultraschallsensors mit einer elektronischen Steuer- und Auswerteschaltung verbunden sind, mit der die zusätzlich zum Normalbetrieb der Auswertezyklus oder die Auswertezyklen generierbar sind, ein Vergleich der empfangen Signalstärken durchführbar und mit Signal- oder Anzeigemittel die Verfügbarkeit des Ultraschallsensors signalisierbar ist.

Ein besonders vorteilhafte Verwendung der Erfindung ergibt sich, wenn der mindestens eine Ultraschallsensor Bestandteil eines Abstands- oder Umfelderkennungssystems für ein Parkassistenzsystems bei einem Fahrzeug ist.

Insbesondere bei der Verwendung der Erfindung bei Umfelderkennungssystem in Fahrzeugen kann es sein, dass Umweltbedingungen, wie Eis. Schnee oder Schmutz des System beeinträchtigen, sodass eine Aussage über die Verfügbarkeit der von den Ultraschallsensoren gelieferten Informationen vorteilhaft ist. Bei einer üblichen Ansteuerreihenfolge im Normalbetrieb einer solchen Anordnung werden die Ultraschallsensoren immer derart nacheinander angesteuert, dass eine gegenseitige Beeinflussung weitgehend vermieden ist. Gemäß der Erfindung werden jedoch die Ultraschallsensoren in einer Weise zyklisch hintereinander oder gleichzeitig angesteuert, dass sich zum einen der Abstand der Ansteuerungszeit eines Ultraschallsensoren drastisch verkürzt und zum Anderen die gegenseitige Beeinflussung und somit die Anzahl der empfangenen Schallwellen zunimmt.

Es wird, wie zuvor beschrieben, unter gleichen öder ähnlichen Umfeldbedingungen und Situationen die Empfindlichkeit des Umfelderkennungssystems variiert, sodass aus dem Vergleich der Signalstärken und/oder aus der gegenseitigen Beeinflussung eine Aussage über die Verfügbarkeit des Systems und der einzelnen Ultraschallsensoren möglich ist. Das heißt, dass mit der Erfindung prinzipiell Objekte als reale Hindernisse zu erkennen sind oder nicht. Diese Aussage kann auch z. B. prozentual erfolgen.

Der Nutzer des erfindungsgemäßen Verfahrens oder der Anordnung kann somit in vorteilhafter Weise gezielt darauf hingewiesen werden, dass beispielsweise ein Ultraschallsensor verschmutzt ist und keine korrekten Hindernisinformation liefern kann. Dadurch können mittels der Angabe der Verfügbarkeit die gelieferten Informationen des Umfeldes bewertet werden und es können ggf. Korrekturmaßnahmen vorgenommen werden.

Bei beiden Messsituationen ist es wichtig, dass die "empfindlichen"' Messdaten in einer annähernd ähnlichen Umfeldsituation aufgezeichnet werden wie die "unempfindlichen" Messdaten, damit ein direkter Vergleich möglich ist. Sollten beispielsweise die "empfindlichen" Messdaten bei einem stehendem Fahrzeug in einer Garage aufgezeichnet worden sein, und die "unempfindlichen" während einer Fahrt im Regen, so sind diese nicht miteinander vergleichbar, da sich die Umfeldbedingungen unterscheiden.

### Kurze Beschreibung der Zeichnung

Ein Ausführungsbeispiel der Erfindung wird anhand der Figuren der Zeichnung erläutert. Es zeigen:
Figur 1 eine Prinzipdarstellung einer Anordnung mit einem Ultraschallsensor für ein Umfelderkennungssystem bei Fahrzeugen,
Figur 2 eine Prinzipdarstellung einer Anordnung mit zwei Ultraschallsensoren und
Figuren 3 bis 3 Verläufe der Amplituden des gesendeten und empfangenen Ultraschallsignals der Ultraschallsensoren bei einem erfindungsgemäßen Verfahren.

### Wege zur Ausführung der Erfindung

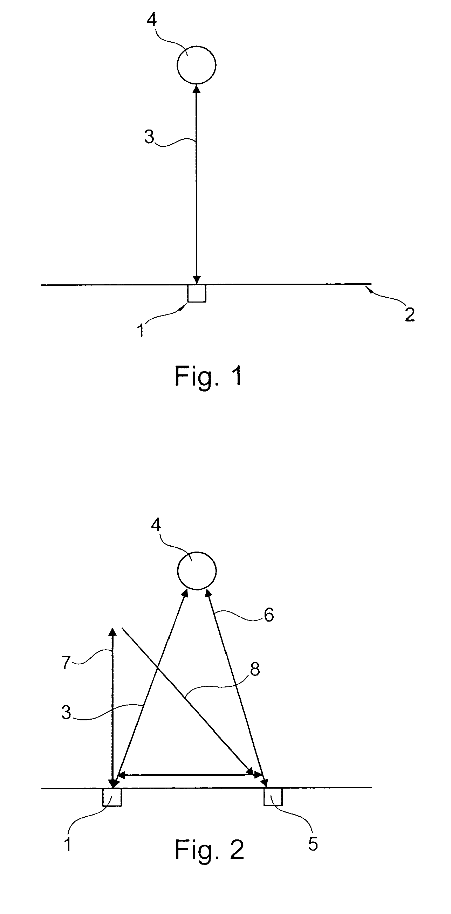

Aus Figur 1 ist eine Anordnung mit einem Ultraschallsensor 1 an einem Stoßfänger 2 eines hier nicht näher erläuterten Fahrzeugs zur Erläuterung des Prinzips einer Umfelderkennung im Normalbetrieb zu entnehmen, bei der im Ultraschallsensor 1 ein Sender und ein Empfänger vorhanden ist. Die ausgesendeten Ultraschallsignale gemäß Pfeil 3 werden von einem Objekt 4 reflektiert und das reflektierte Echo (Pfeil 3) wird über den Empfänger des Ultraschallsensor 1 ausgewertet.

Im Fall eines verschmutzten Ultraschallsensor 1 würde der Ultraschallsensor 1 keine Information über ein empfangenes Ultraschallsignal liefern, obwohl sich das Objekt 4 vor dem Ultraschallsensor 1 befindet, welches dieser ohne eine Verschmutzung angezeigt hätte. Wenn sich kein reales Objekt 4 vor dem Ultraschallsensor 1 befinden würde, so wird der Ultraschallsensor 1 aber in der Art beeinflusst, dass durch die Verschmutzung das Empfangssignal kontinuierlich gestört ist und ein virtuelles Objekt angezeigt wird. Hierbei kann es auch noch zu Mehrfachreflexionen zwischen dem Ultraschallsensor 1 und der Verschmutzung kommen.

In Figur 2 sind zwei Ultraschallsensoren 1 und 5 als Ausführungsbeispiel vorhanden, die Sende- und Empfangsstrecken gemäß der Pfeile 3 und 6 und außerdem noch Sende- und Empfangsstrecken gemäß der Pfeile 7 und 8 für Reflexionen auf einer Fahrbahnoberfläche 6 aufweisen. Hier werden nun die Ultraschallsensoren 1 und 5 zyklisch hintereinander oder gleichzeitig angesteuert, sodass durch die gegenseitige Beeinflussung die Anzahl der empfangenen Schallwellen zunimmt und unter gleichen öder ähnlichen Umfeldbedingungen und Situationen wird die Empfangsempfindlichkeit der Ultraschallsensoren 1 und 5 derart variiert, dass aus dem Vergleich der Signalstärken und/oder aus der gegenseitigen Beeinflussung eine Aussage über die Verfügbarkeit des Systems und der einzelnen Ultraschallsensoren 1 und 5 möglich ist.

Die Ansteuerungsreihenfolge der Ultraschallsensoren 1 und 5 wird somit im Auswertezyklus so gewählt, dass sie sich gegenseitig beeinflussen können und die Empfangsempfindlichkeit der Ultraschallsensoren 1 und 5 wird zunächst auf "empfindlich" programmiert und dann werden einige Messungen durchgeführt. Anschließend wird die Empfangsempfindlichkeit der Ultraschallsensoren 1 und 5 auf "unempfindlich" programmiert und dann werden weitere Messdaten aufgenommen. Schließlich werden die Messdaten bei der Einstellung "empfindlich" und "unempfindlich" miteinander verglichen.

Wenn nun einer oder beide Ultraschallsensoren 1 und 5 verschmutzt sind, so können die "empfindlichen" und die "unempfindlichen" Messdaten dieses Ultraschallsensors 1 oder 5 keinerlei empfangene Reflexionen aufweisen. Wenn jedoch nur einer der Ultraschallsensoren 1 und 5 verschmutzt ist, so weisen die "empfindlichen" Messdaten aller Ultraschallsensoren 1 und 5 hier Reflexionen auf, jedoch würden sich die "unempfindlichen" Messdaten eines nicht verschmutzten Ultraschallsensors 1 oder 5 hier deutlich von den "empfindlichen" Messdaten unterscheiden. Nur die Messdaten des verschmutzten Ultraschallsensors 1 oder 5 Sensors sehen annähernd identisch aus und unterscheiden sich nicht oder nur wenig von den "empfindlichen" Messdaten.

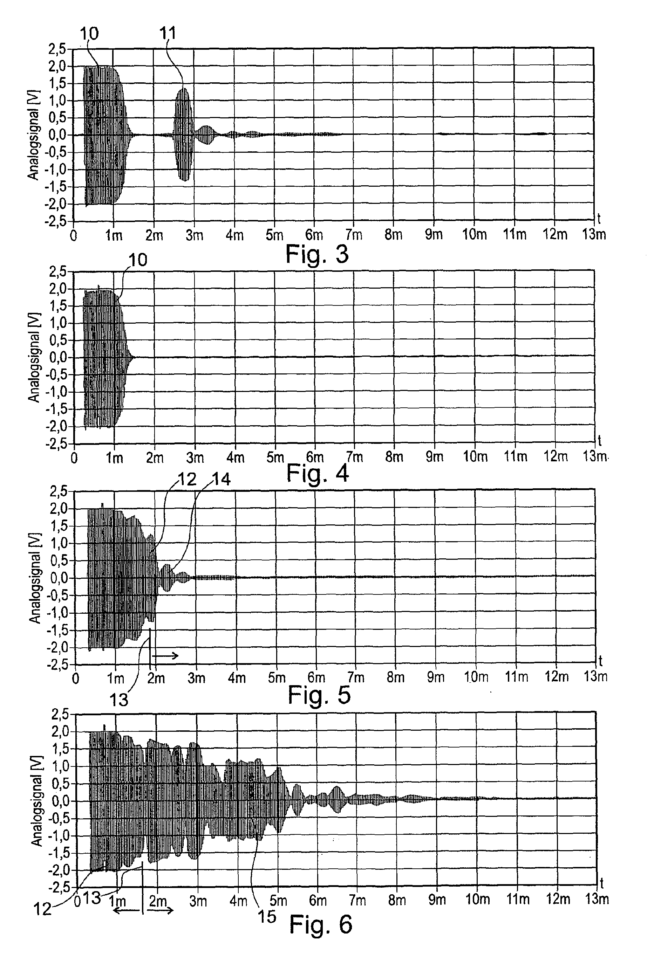

In Figur 3 ist ein Signalverlauf 10 eines gesendeten Ultraschallsignals eines Ultraschallsensors 1 oder 5 im Normalbetrieb zur Erkennung eines Objektes 4 (Figur 1 und/oder 2) und ein Signalverlauf 11 eines empfangenen Signals gezeigt. Aus Figur 4 ist zu entnehmen, dass beim Fehlen eines Objekts 4 oder bei einem total verschmutzten Ultraschallsensor 1 oder 5 kein Empfangssignal auftritt.

Figur 5 zeigt den Fall einer "unempfindlichen" Messung bei einem verschmutzten Ultraschallsensor 1 oder 5, wobei sich hier an einen Signalverlauf 12 des gesendeten Signals ab einer vorgegebenen Zeitmarkierung 13 Reflexionen anhand von Signalverläufen 14 anschließen, die virtuelle Echos darstellen und nicht auf ein reales Objekt 4 hinweisen. Aus Figur 6 ist der Fall einer "empfindlichen" Messung bei einem verschmutzten Ultraschallsensor 1 oder 5 zu entnehmen, wobei sich hier an den Signalverlauf 12 des gesendeten Signals ab der vorgegebenen Zeitmarkierung 13 Reflexionen anschließen, die ebenfalls virtuelle Echos darstellen, sich aber wesentlich von den Echos des Signalverlaufs 14 nach der Figur 5 unterscheiden.

## Patentansprüche

1. Verfahren zur Verfügbarkeitsprüfung von Ultraschallsensoren (1,5), die einen Sender und einen Empfänger aufweisen und die die von einem zu erfassenden Objekt (4) reflektierten Ultraschallsignale auswerten, **dadurch gekennzeichnet, dass** in einem Auswertezyklus unter zumindest ähnlichen Umgebungsbedingungen an der Messstrecke zwischen dem jeweiligen Ultraschallsensor (1,5) und dem Objekt (4) die Empfangsempfindlichkeit des Empfängers zwischen einem relativ empfindlichen und einem relativ unempfindlichen Wert verändert wird und aus dem Vergleich der beiden empfangenen Signale im Falle von relativ gleichen Signalstärken eine Behinderung der Verfügbarkeit des jeweiligen Ultraschallsensors (1,5) signalisiert wird.

2. Verfahren nach Anspruch 1, **dadurch gekennzeichnet, dass** bei einer Verwendung von einer Mehrzahl von Ultraschallsensoren (1,5) einer oder mehrere Ultraschallsensoren (1,5) im Auswertezyklus angesteuert werden und auch die reflektierten Ultraschallsignale von den jeweils anderen Ultraschallsensoren (1,5) ausgewertet werden.

3. Verfahren nach Anspruch 2, **dadurch gekennzeichnet, dass** die Ultraschallsensoren (1,5) im Auswertezyklus in einer vorgegebenen Reihenfolge hintereinander angesteuert werden.

4. Verfahren nach Anspruch 2, **dadurch gekennzeichnet, dass** alle Ultraschallsensoren (1,5) im Auswertezyklus gleichzeitig angesteuert werden.

5. Verfahren nach einem der vorhergehenden Ansprüche, **dadurch gekennzeichnet, dass** der Auswertezyklus in vorgegeben zeitlichen Abständen in den Normalbetrieb der Ultraschallsensoren (1,5) eingefügt ist.

6. Verfahren nach einem der Ansprüche 1 bis 4, **dadurch gekennzeichnet, dass** der Auswertezyklus in Abhängigkeit von physikalischen Bedingungen der Messstrecke oder der Messanordnung generiert wird.

7. Verfahren nach einem der Ansprüche 1 bis 4, **dadurch gekennzeichnet, dass** der Auswertezyklus manuell generiert wird.

8. Anordnung zur Ausführung des Verfahrens nach einem der vorhergehenden Ansprüche, **dadurch gekennzeichnet, dass** mindestens ein Ultraschallsensor (1,5) vorhanden ist, der in einem vorgegebenen Abstand ein zu erfassenden Objekt (4) angeordnet ist und dass sowohl der jeweilige Sender und der jeweilige Empfänger des Ultraschallsensors (1,5) mit einer elektronischen Steuer- und Auswerteschaltung verbunden sind, mit der die zusätzlich zum Normalbetrieb der oder die Auswertezyklen generierbar sind, ein Vergleich der empfangen Signalstärken durchführbar und mit Signal- oder Anzeigemittel die Verfügbarkeit des jeweiligen Ultraschallsensors (1,5) signalisierbar ist.

9. Verwendung eines Verfahrens oder einer Anordnung nach einem der vorhergehenden Ansprüche, **dadurch gekennzeichnet, dass** der mindestens eine Ultraschallsensor (1,5) Bestandteil eines Abstands- oder Umfelderkennungssystems für ein Parkassistenzsystems bei einem Fahrzeug ist.
